# EUROPEAN PATENT APPLICATION

(11) **EP 4 178 061 A2**
(43) Date of publication of application: **10.05.2023**
(21) Application number: 22205738.2
(22) Date of filing: 07.11.2022
(51) Int. Cl.: H02J 1/10, H02J 1/08, H02J 7/00

(54) **POWER INTEGRATION SYSTEM WITH MOTOR DRIVE AND BATTERY CHARGING AND DISCHARGING FUNCTION**

(30) Priority: 08.11.2021 US 202163276866 P; 21.09.2022 TW 111135647
(71) Applicant: Delta Electronics Inc., Taoyuan City 320023 (TW)
(72) Inventor: LIAO, Chih-Chia, 320023 Taoyuan City (TW); LI, Cheng-Chung, 320023 Taoyuan City (TW); TSAI, Wen-Chieh, 320023 Taoyuan City (TW); CHENG, Hsieh-Hsiung, 320023 Taoyuan City (TW)
(74) Representative: 2K Patentanwälte Blasberg Kewitz & Reichel

(57) **Abstract**

A power integration system with motor drive and battery charging and discharging function includes a motor (10), a power integration circuit (20), and a battery (30). The power integration circuit (20) includes an inverter (21) and a charger (22). The inverter (21) includes multi-phase bridge arms, and each bridge arm has an upper switch (Q₁, Q₃, Qs) and a lower switch (Q₂, Q₄, Q₆). Each bridge arm is correspondingly coupled to each phase winding of the motor (10). The charger (22) includes a charging unit (22A, 22B, 22C) having at least a switch, an inductor, or a diode and the upper switch (Q₁, Q₃, Qs) and the lower switch (Q₂, Q₄, Q₆) of at least one bridge arm of the shared inverter (21). The power integration circuit (20) receives a DC power provided by a DC power apparatus (40), and the charger (22) converts the DC power to charge the battery (30). The battery (30) provides the required power of driving the motor (10) through the inverter (21).

## Description

### BACKGROUND

### Technical Field

The present disclosure relates to a power integration system, and more particularly to a power integration system with motor drive and battery charging and discharging function.

### Description of Related Art

The statements in this section merely provide background information related to the present disclosure and do not necessarily constitute prior art.

The current light electric vehicle system includes a motor driver and a charger, wherein the charger is divided into the on-board charger and the off-board charger. Since the chargers have different battery specifications, various manufacturers will introduce dedicated off-board chargers for users to use, and the disadvantage is that the chargers are not compatible with different vehicles, which makes it inconvenient to carry.

### SUMMARY

An objective of the present disclosure is to provide a power integration system with motor drive and battery charging and discharging function to solve the problems of existing technology.

In order to achieve the above-mentioned objective, the power integration system with motor drive and battery charging and discharging function includes a motor, a power integration circuit, and a battery. The power integration circuit includes an inverter and a charger. The inverter includes multi-phase bridge arms. Each bridge arm includes an upper switch and a lower switch, and each bridge is correspondingly coupled to each phase winding of the motor. The charger includes a charging unit having at least a switch, an inductor, or a diode, and the upper switch and the lower switch of at least one bridge arm of the shared inverter. The battery is coupled to the power integration circuit. The power integration circuit receives a DC power provided by a DC power apparatus, and the charger converts the DC power to charge the battery, and the battery provides power required to drive the motor through the inverter.

Accordingly, the power integration system with motor drive and battery charging and discharging function is provided to realize the structure that the power switches of a three-phase motor driver are shared in the charger, which can reduce the number of external components, thereby reducing the size and achieving high efficiency.

Another objective of the present disclosure is to provide a power integration system with motor drive and battery charging and discharging function to solve the problems of existing technology.

In order to achieve the above-mentioned objective, the power integration system with motor drive and battery charging and discharging function includes a motor, a power integration circuit, and a battery. The power integration circuit includes an inverter and a charger. The inverter includes multi-phase bridge arms. Each bridge arm includes an upper switch and a lower switch, and each bridge is correspondingly coupled to each phase winding of the motor. The charger includes a charging unit having at least a switch, an inductor, or a diode, and the upper switch and the lower switch of at least one bridge arm of the shared inverter. The battery is coupled to the power integration circuit. The charging unit includes an energy-storing inductor and a sub path. The energy-storing inductor is coupled to the shared lower switch. The sub path is coupled to the energy-storing inductor. The power integration circuit receives a DC power provided by a DC power apparatus, and the charger converts the DC power to charge the battery, and the battery provides power required to drive the motor through the inverter.

Accordingly, the power integration system with motor drive and battery charging and discharging function is provided to realize the structure that the power switches of a three-phase motor driver are shared in the charger, which can reduce the number of external components, thereby reducing the size and achieving high efficiency.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWINGS

The present disclosure can be more fully understood by reading the following detailed description of the embodiment, with reference made to the accompanying drawing as follows:
FIG. 1 is a block diagram of a power integration system with motor drive and battery charging and discharging function used with a DC power apparatus and a power-receiving apparatus according to the present disclosure.
FIG. 2 is a block diagram of the power integration system with motor drive and battery charging and discharging function used with the DC power apparatus according to the present disclosure.
FIG. 3 is a block circuit diagram of the power integration system with motor drive and battery charging and discharging function according to a first embodiment of the present disclosure.
FIG. 4 is a block circuit diagram of a charger in FIG. 3 according to a first embodiment of the present disclosure.
FIG. 5 is a block circuit diagram of the charger in FIG. 3 according to a second embodiment of the present disclosure.
FIG. 6 is a block circuit diagram of the charger in FIG. 3 according to a third embodiment of the present disclosure.
FIG. 7 is a block circuit diagram of the charger in FIG. 3 according to a fourth embodiment of the present disclosure.
FIG. 8 is a block circuit diagram of the charger in FIG. 3 according to a fifth embodiment of the present disclosure.
FIG. 9 is a block circuit diagram of the charger in FIG. 3 according to a sixth embodiment of the present disclosure.
FIG. 10 is a block circuit diagram of the power integration system with motor drive and battery charging and discharging function according to a second embodiment of the present disclosure.
FIG. 11 is a block circuit diagram of a charger in FIG. 10 according to a first embodiment of the present disclosure.
FIG. 12 is a block circuit diagram of the charger in FIG. 10 according to a second embodiment of the present disclosure.
FIG. 13 is a block circuit diagram of the power integration system with motor drive and battery charging and discharging function having a charger of a first embodiment according to a third embodiment of the present disclosure.
FIG. 14 is a block circuit diagram of the power integration system with motor drive and battery charging and discharging function having the charger of a second embodiment according to the third embodiment of the present disclosure.

### DETAILED DESCRIPTION

Reference will now be made to the drawing figures to describe the present disclosure in detail. It will be understood that the drawing figures and exemplified embodiments of present disclosure are not limited to the details thereof.

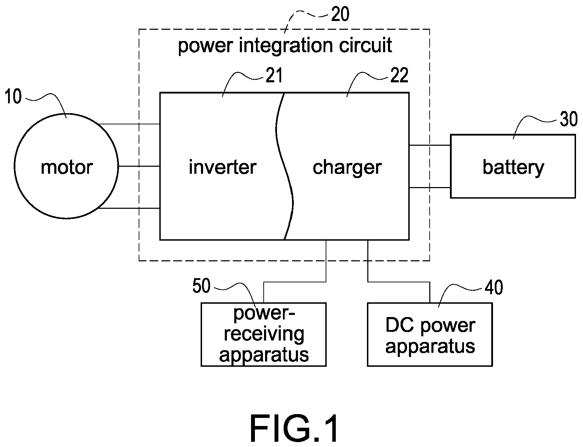

Due to the versatility of Type-C transmission cables and the convenience of USB-PD chargers, the present disclosure proposes an integrated (shared components) bidirectional charger structure as shown in FIG. 1, which combines the traditional three-phase motor driver and charger to form an integration system. The system can be directly connected to an external USB-PD through a Type-C transmission cable for charging. In addition to the charging function, the battery energy can also be provided to external apparatuses (or power-receiving apparatuses) through Type-C transmission cables, such as but not limited to light electric vehicles (such as electric scooters, electric bicycles, electric wheelchairs, electric skateboards, etc.). Accordingly, the power integration system with motor drive and battery charging and discharging function is provided to realize the structure that the power switches of a three-phase motor driver are shared in the charger, which can reduce the number of external components, thereby reducing the size and achieving high efficiency.

Please refer to FIG. 1, which shows a block diagram of a power integration system with motor drive and battery charging and discharging function used with a DC power apparatus and a power-receiving apparatus according to the present disclosure. The power integration system with motor drive and battery charging and discharging function (hereinafter referred to as the power integration system) includes a motor 10, a power integration circuit 20, and a battery 30. The power integration circuit 20 includes an inverter 21 and a charger 22. The inverter 21 has multi-phase (for example, three-phase) bridge arms, each phase bridge arm includes an upper switch and a lower switch, and each phase bridge arm is correspondingly coupled to each phase winding of the motor 10. The charger 22 includes a charging unit having at least a switch, an inductor, or a diode, and the upper switch and the lower switch of at least one bridge arm of the shared inverter 21. In other words, the power integration circuit 20 is a shared-component circuit structure having the inverter 21 and the charger 22. Specifically, the part of the shared component is the upper switch and the lower switch of the at least one bridge arm, which will be described in detail later. The battery 30 is coupled to the power integration circuit 20.

The power integration system shown in FIG. 1 is a bidirectional structure. Therefore, the power integration circuit 20 receives DC power provided by a DC power apparatus 40, and the charger 22 of the power integration circuit 20 converts the DC power to charge the battery 30 so that the DC power can charge the battery 30. In one embodiment, the DC power apparatus 40 is, for example, but not limited to, USB-PD. Take the light electric vehicle - electric bicycle as an example, the motor 10, the power integration circuit 20, and the battery 30 are installed (disposed) inside the electric bicycle, and the DC power provided by the DC power apparatus 40 is an external USB-PD DC power. Therefore, when the electric bicycle is plugged into the USB-PD DC power for charging, the charger 22 of the power integration circuit 20 converts the USB-PD DC power to charge the battery 30 installed inside the vehicle body of the electric bicycle.

Moreover, the battery 30 provides power required by a power-receiving apparatus 50 through the charger 22. As mentioned above, the power-receiving apparatus 50 is, for example, but not limited to, a portable mobile apparatus (such as a mobile phone, a tablet computer, a notebook computer, etc.). When the user is outdoors, the user can plug a mobile phone, a power bank, or an electric bicycle (i.e., the power-receiving apparatus 50) into the charger 22 of the power integration circuit 20 installed inside another electric bicycle for charging, the battery 30 supplies (provides) the power required by the mobile phone through the charger 22 to charge the mobile phone, the power bank, or the electric bicycle.

Moreover, the battery 30 provides power required to drive the motor 10 through the inverter 21. When the user rides the electric bicycle outdoors, the power required to drive the motor 10 is supplied by the battery 30.

Moreover, the power-receiving apparatus 50 charges the battery 30 through the charger 22. When the electric bicycle is not in the riding state and no DC power (the USB-PD DC power) provided by the DC power apparatus 40 charges the battery 30, the battery 30 is charged by the power provided from the power-receiving apparatus 50 (i.e., the mobile phone, the power bank, or the electric bicycle). For example, when the user rides the electric bicycle outdoors and the battery 30 cannot provide the power required by the electric bicycle, the battery 30 can be charged by the power provided from the power-receiving apparatus 50 so that the electric bicycle can be ridden in a short time to the nearest place with the DC power apparatus 40 to be fully charged.

Therefore, the power integration system shown in FIG. 1 provides a bidirectional power path, including that the DC power apparatus 40 charges the battery 30 or the power-receiving apparatus 50 charging the battery 30, and the battery 30 supplies power to the power-receiving apparatus 50 or the battery 30 supplies power to the motor.

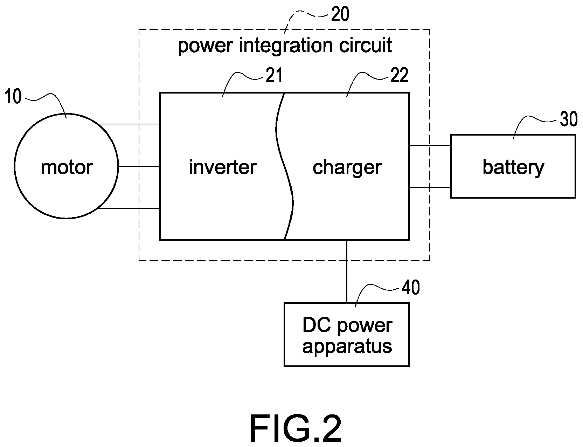

Please refer to FIG. 2, which shows a block diagram of the power integration system with motor drive and battery charging and discharging function used with the DC power apparatus according to the present disclosure. The major difference between the embodiment shown in FIG. 2 and the embodiment shown in FIG. 1 is that the former does not have the power-receiving apparatus 50. In other words, the power integration system shown in FIG. 2 is applied (operated) without the power-receiving apparatus 50. Therefore, the power integration system shown in FIG. 2 provides a unidirectional power path, including the DC power apparatus 40 charging the battery 30, and the battery 30 supplying power to the motor 10.

For other operations that are the same as those of the first embodiment shown in FIG. 1, refer to the foregoing description, and the detail description is omitted here for conciseness.

Hereinafter, different embodiments of the power integration circuit of the first embodiment shown in FIG. 1 will be described.

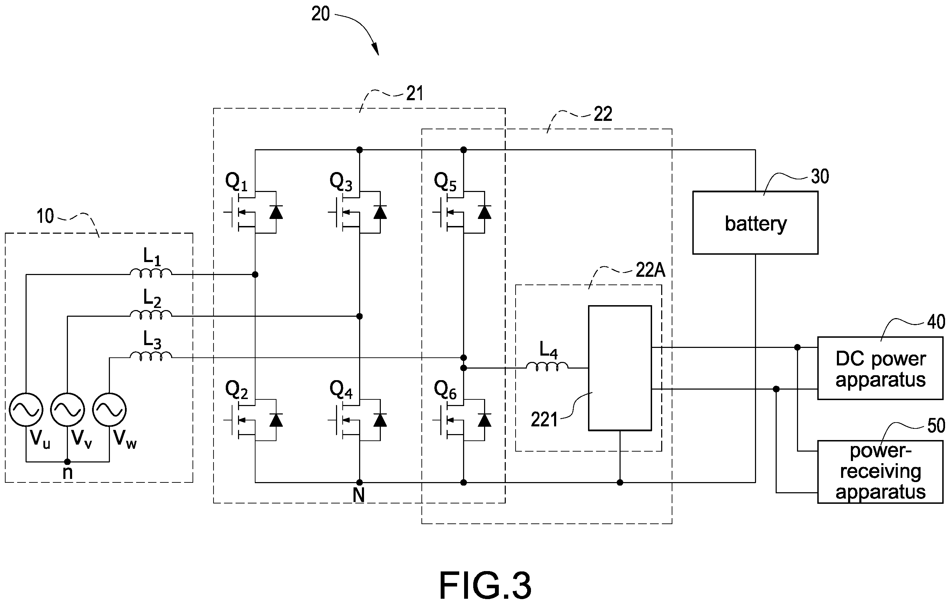

Please refer to FIG. 3, which shows a block circuit diagram of the power integration system with motor drive and battery charging and discharging function according to a first embodiment of the present disclosure. The charging unit 22A of the charger 22 includes an energy-storing inductor L₄ and a sub path 221. The energy-storing inductor L₄ is coupled to a common-connected node of the shared upper switch Q₅ and lower switch Q₆. The sub path 221 is coupled to the energy-storing inductor L₄, and forming an H-bridge arm with the shared upper switch Q₅ and lower switch Q₆.

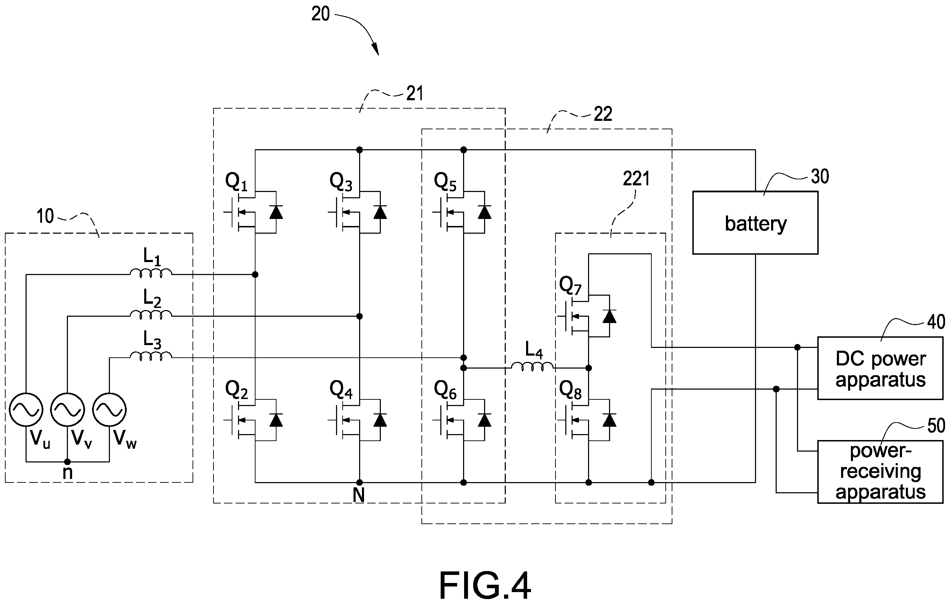

Please refer to FIG. 4, which shows a block circuit diagram of a charger in FIG. 3 according to a first embodiment of the present disclosure. The sub path 221 of the charging unit 22A includes a first switch Q₇ and a second switch Q₈. A first end of the energy-storing inductor L₄ is coupled to the common-connected node of the shared upper switch Q₅ and lower switch Q₆, and a second end of the energy-storing inductor L₄ is coupled to a common-connected node of the first switch Q₇ and the second switch Q₈.

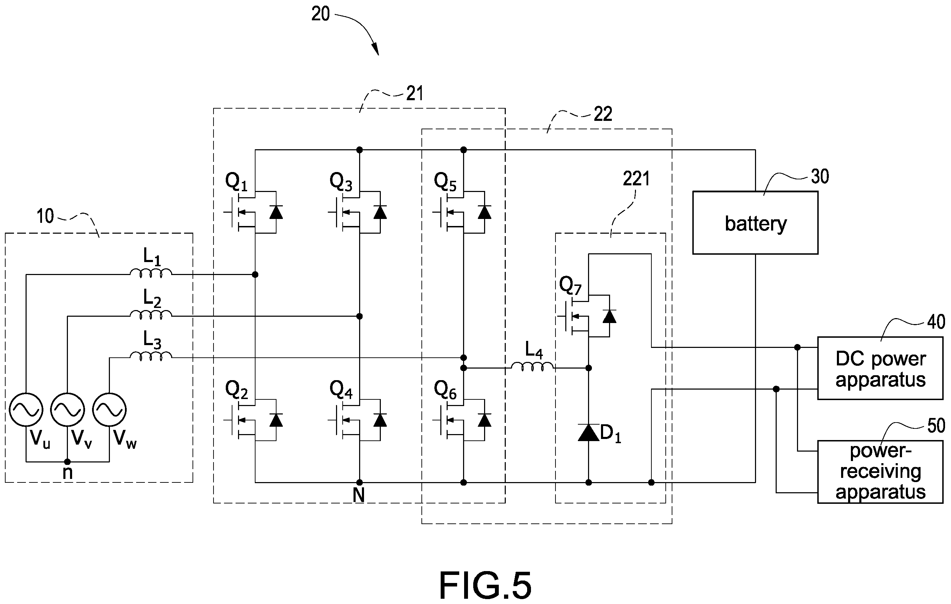

Please refer to FIG. 5, which shows a block circuit diagram of the charger in FIG. 3 according to a second embodiment of the present disclosure. The sub path 221 of the charging unit 22A includes a first switch Q₇ and a first diode D₁. A first end of the energy-storing inductor L₄ is coupled to the common-connected node of the shared upper switch Q₅ and lower switch Q₆, and a second end of the energy-storing inductor L₄ is coupled to a common-connected node of the first switch Q₇ and the first diode D₁.

For the circuits (i.e., the H-bridge arm circuits) shown in FIG. 4 and FIG. 5, when a voltage of the battery 30 is greater than a reference voltage value, the charging unit 22A operates in a boost (step-up) mode to charge the battery 30, and when the voltage of the battery 30 is less than the reference voltage value, the charging unit 22A operates in a buck (step-down) mode to charge the battery 30. Moreover, the battery 30 provides power required by the power-receiving apparatus 50 through the charger 22, or the power-receiving apparatus 50 charges the battery 30 through the charger 22. Moreover, the charger 22 operates in a boost mode or a buck mode to make the battery 30 discharge to the power-receiving apparatus 50.

In addition to the H-bridge arm structure, the present disclosure also provides a half-bridge arm structure. Correspondingly, the charging unit 22A of the charger 22 includes an energy-storing inductor L₄ and a sub path 221. The energy-storing inductor L₄ is coupled to a common-connected node of the shared upper switch Q₅ and lower switch Q₆. The sub path 221 is coupled to the energy-storing inductor L₄ through the upper switch Q₅ or the lower switch Q₆, and forming a half-bridge arm with the shared upper switch Q₅ and lower switch Q₆.

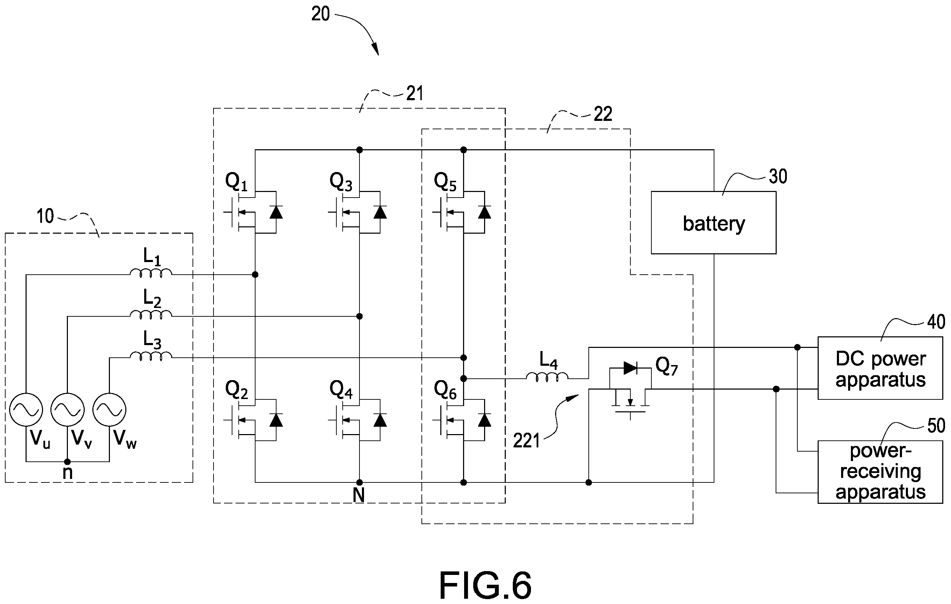

Please refer to FIG. 6, which shows a block circuit diagram of the charger in FIG. 3 according to a third embodiment of the present disclosure. The sub path 221 of the charging unit 22A includes a first switch Q₇. The first switch Q₇ is coupled to the shared lower switch Q₆, and coupled to the energy-storing inductor L₄ through the lower switch Q₆.

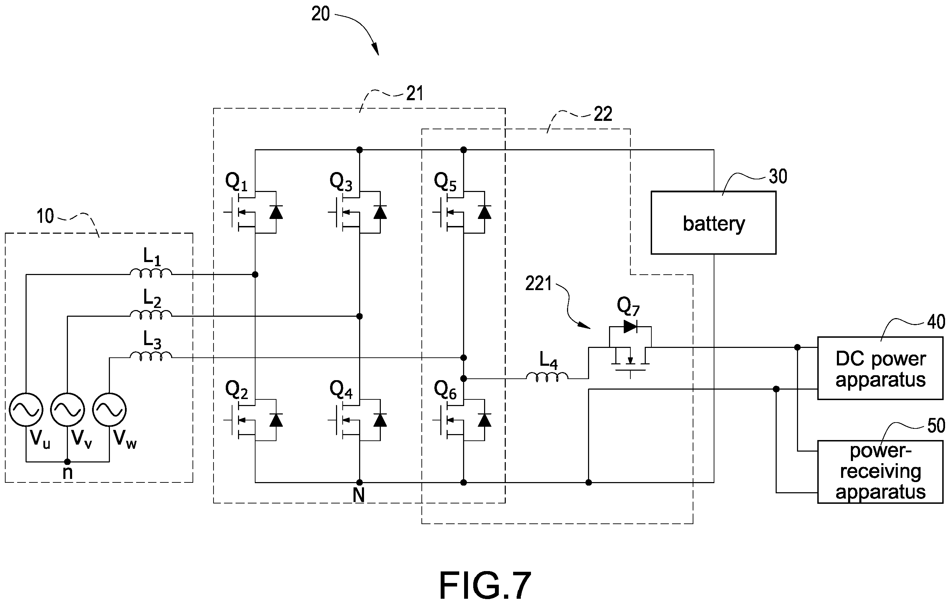

Please refer to FIG. 7, which shows a block circuit diagram of the charger in FIG. 3 according to a fourth embodiment of the present disclosure. The sub path 221 of the charging unit 22A includes a first switch Q₇. A first end of the first switch Q₇ is coupled to the DC power apparatus 40 and the power-receiving apparatus 50, and a second end of the first switch Q₇ is coupled to a common-connected node of the shared upper switch Q₅ and lower switch Q₆ through the energy-storing inductor L₄.

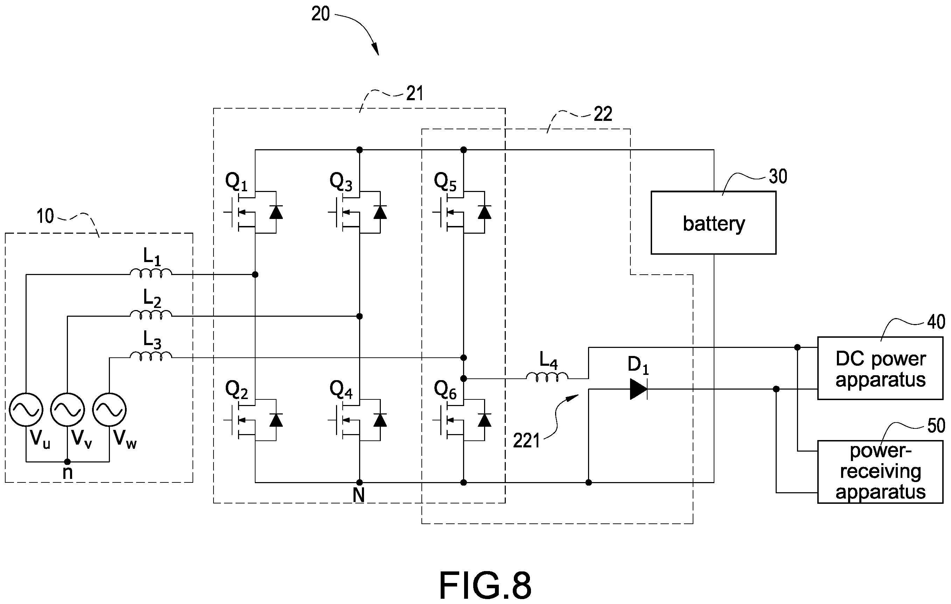

Please refer to FIG. 8, which shows a block circuit diagram of the charger in FIG. 3 according to a fifth embodiment of the present disclosure. The sub path 221 of the charging unit 22A includes a first diode D₁. The first diode D₁ is coupled to the shared lower switch Q₆, and coupled to the energy-storing inductor L₄ through the lower switch Q₆.

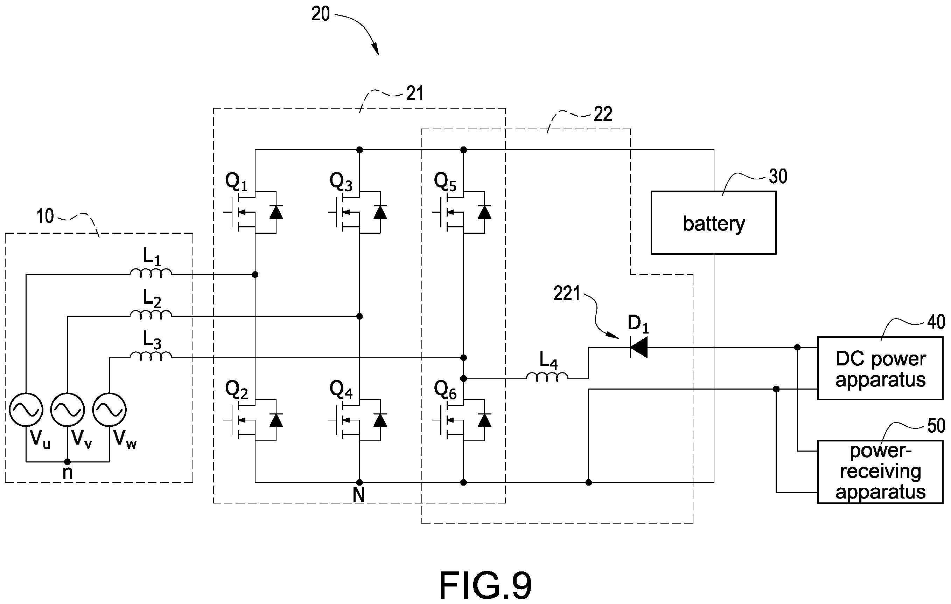

Please refer to FIG. 9, which shows a block circuit diagram of the charger in FIG. 3 according to a sixth embodiment of the present disclosure. The sub path 221 of the charging unit 22A includes a first diode D₁. A first end of the first diode D₁ is coupled to the DC power apparatus 40 and the power-receiving apparatus 50, and a second end of the first diode D₁ is coupled to a common-connected node of the shared upper switch Q₅ and lower switch Q₆ through the energy-storing inductor L₄.

For the circuits (i.e., the half-bridge arm circuits) shown in FIG. 6 to FIG. 9, according to a voltage of the battery 30, the charging unit 22A operates in a boost (step-up) mode or a buck (step-down) mode to charge the battery 30. Moreover, according to a voltage of the battery 30, the charging unit 22A makes the battery 30 operate in a boost (step-up) mode or a buck (step-down) mode to discharge to the power-receiving apparatus 50.

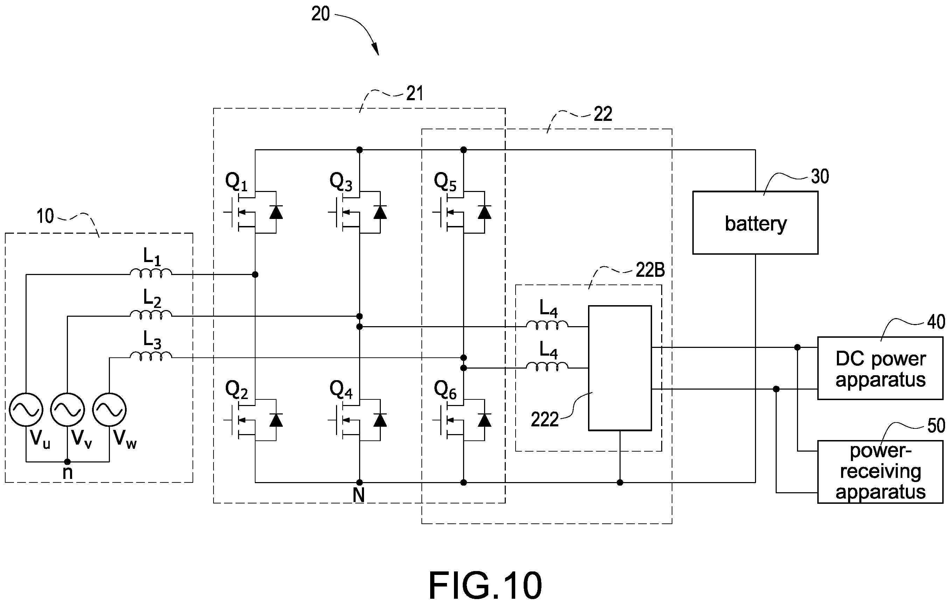

Please refer to FIG. 10, which shows a block circuit diagram of the power integration system with motor drive and battery charging and discharging function according to a second embodiment of the present disclosure. The charging unit 22B of the charger 22 includes a plurality of energy-storing inductors L₄ and a sub path 222. The plurality of energy-storing inductors is respectively coupled to common-connected nodes of the shared upper switches Q₅ and lower switches Q₆ of the multi-phase bridge arms. The sub path 222 is coupled to the plurality of energy-storing inductors L₄.

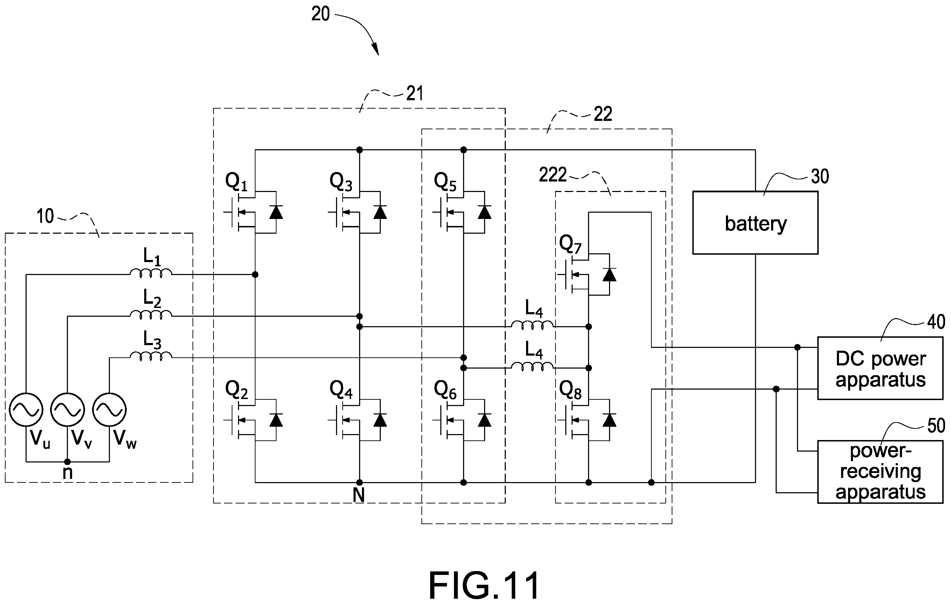

Please refer to FIG. 11, which shows a block circuit diagram of a charger in FIG. 10 according to a first embodiment of the present disclosure. The sub path 222 of the charging unit 22B includes a first switch Q₇ and a second switch Q₈. A common-connected node of the first switch Q₇ and the second switch Q₈ are coupled to the plurality of energy-storing inductors L₄, and forming an H-bridge arm with the shared upper switches Q₃, Q₅ and lower switches Q₄, Q₆. As shown in FIG. 11, one energy-storing inductors L₄ is coupled to the upper switch Q₃ and the lower switch Q₄, and the other energy-storing inductors L₄ is coupled to the upper switch Q₅ and the lower switch Q₆.

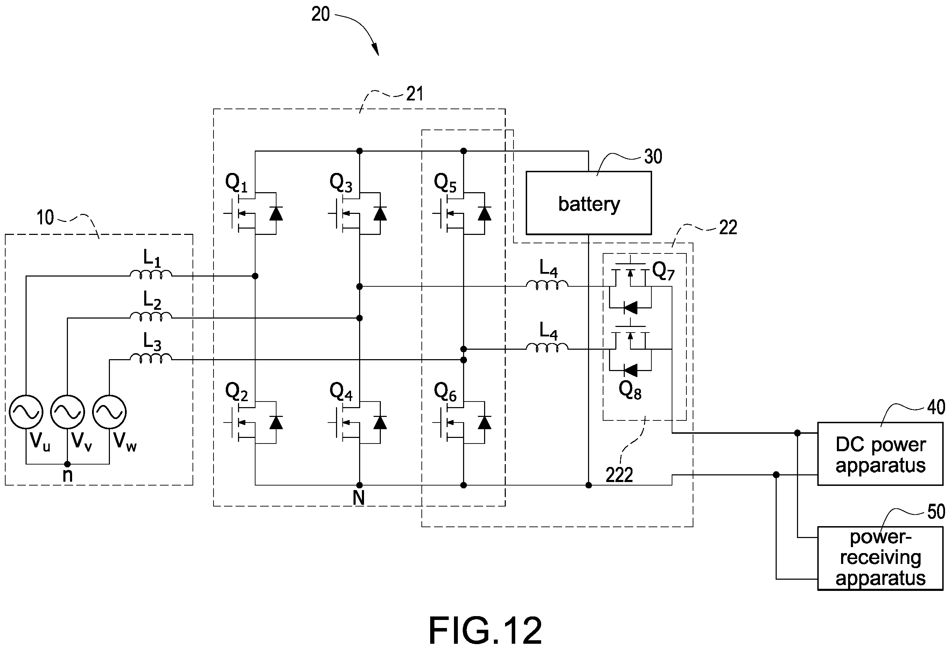

Please refer to FIG. 12, which shows a block circuit diagram of the charger in FIG. 10 according to a second embodiment of the present disclosure. The sub path 222 of the charging unit 22B includes a first switch Q₇ and a second switch Q₈. The first switch Q₇ and the second switch Q₈ are respectively coupled to the upper switches Q₃, Q₅ and the lower switches Q₄, Q₆ through the corresponding energy-storing inductors L₄, and forming a half-bridge arm with the shared upper switches Q₃, Q₅ and lower switches Q₄, Q₆. As shown in FIG. 12, one energy-storing inductors L₄ is coupled to a common-connected node of the upper switch Q₃ and the lower switch Q₄, and the other energy-storing inductors L₄ is coupled to the upper switch Q₅ and the lower switch Q₆.

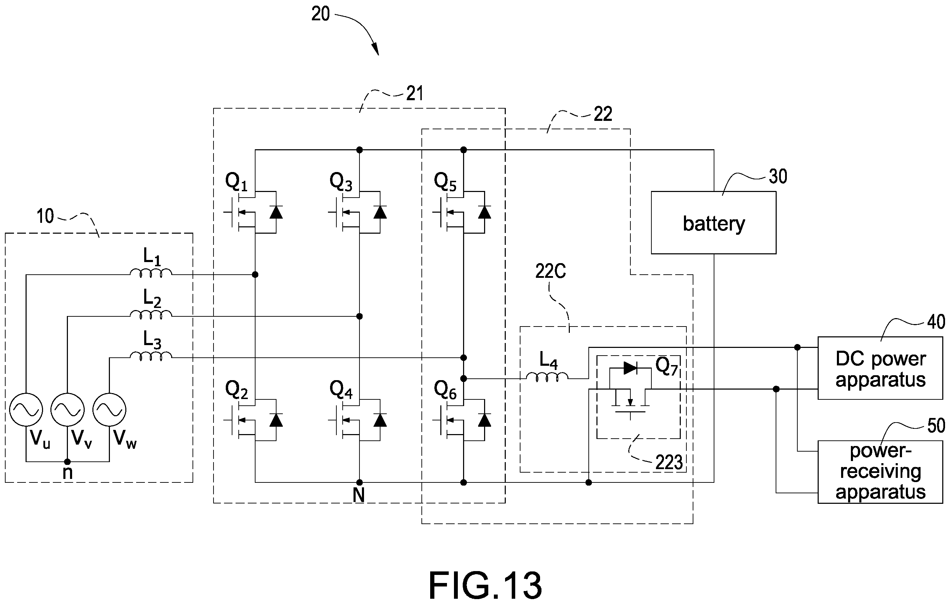

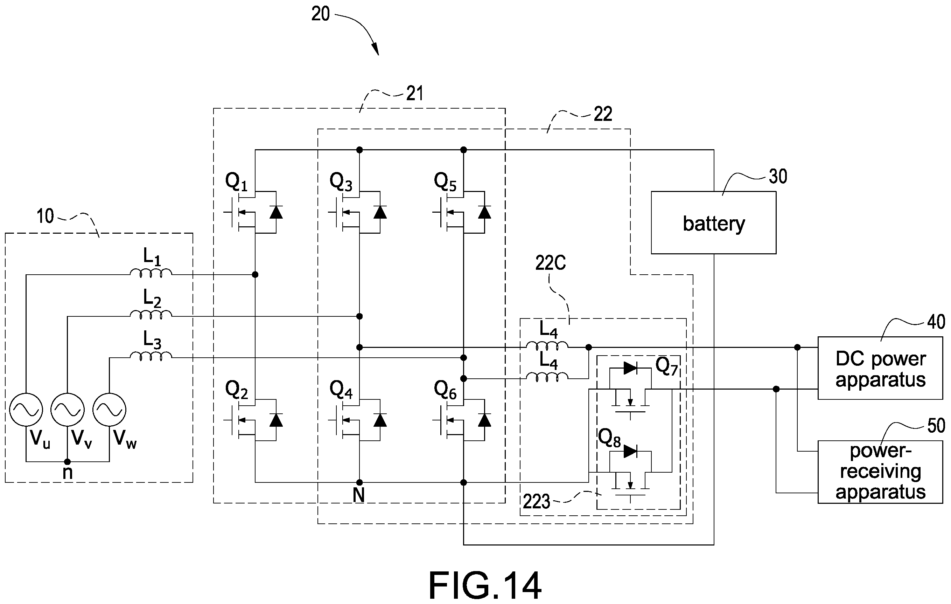

Please refer to FIG. 13 and FIG. 14, which show block circuit diagrams of the power integration system with motor drive and battery charging and discharging function having a charger of a first embodiment and a second embodiment according to a third embodiment of the present disclosure. The charging unit 22C of the charger 22 includes an energy-storing inductors L₄ and a sub path 223. A first end of the charger 22 is coupled to the battery 30, the DC power apparatus 40, and the power-receiving apparatus 50, and a second end of the energy-storing inductors L₄ is coupled to a common-connected node of the shared upper switch Q₅ and lower switch Q₆. The sub path 223 is coupled to the energy-storing inductors L₄ through the lower switch Q₆. As shown in FIG. 13, the sub path 223 of the charging unit 22C includes a first switch Q₇. The first switch Q₇ is coupled to the DC power apparatus 40, the power-receiving apparatus 50, and the lower switch Q₆, and forming a half-bridge arm with the shared upper switch Q₅ and lower switch Q₆. As shown in FIG. 14, the sub path 223 of the charging unit 22C includes a first switch Q₇ and a second switch Q₈. The first switch Q₇ and the second switch Q₈ are respectively coupled to the DC power apparatus 40, the power-receiving apparatus 50, and the lower switches Q₄, Q₆, and forming a bridge arm circuit with the shared upper switches Q₃, Q₅ and lower switches Q₄, Q₆.

For the circuits shown in FIG. 13 and FIG. 14, when a voltage of the battery 30 is greater than a reference voltage value, the charger 22 operates in a boost (step-up) mode to charge the battery 30, and when the voltage of the battery 30 is less than the reference voltage value, the charger 22 operates in a buck (step-down) mode to charge the battery 30. When the voltage of battery is equal to a reference voltage value, the charging unit 22A provide the same voltage to charge the battery. Moreover, the battery 30 provides power required by the power-receiving apparatus 50 through the charger 22, or the power-receiving apparatus 50 charges the battery 30 through the charger 22. Moreover, the charger 22 operates in a boost mode or a buck mode to make the battery 30 discharge to the power-receiving apparatus 50.

Accordingly, the power integration system with motor drive and battery charging and discharging function is provided to realize the structure that the power switches of a three-phase motor driver are shared in the charger, which can reduce the number of external components, thereby reducing the size and achieving high efficiency.

## Claims

1. A power integration system with motor drive and battery charging and discharging function, **characterized in that** the power integration system comprising:
a motor (10),
a power integration circuit (20), comprising:
an inverter (21), comprising multi-phase bridge arms, each bridge arm comprising an upper switch (Q₁, Q₃, Qs) and a lower switch (Q₂, Q₄, Q₆), and each bridge correspondingly coupled to each phase winding of the motor (10), and
a charger (22), comprising a charging unit (22A, 22B, 22C) having at least a switch, an inductor, or a diode, and the upper switch (Q₁, Q₃, Qs) and the lower switch (Q₂, Q₄, Q₆) of at least one bridge arm of the shared inverter (21), and
a battery (30), coupled to the power integration circuit (20),
wherein the power integration circuit (20) receives a DC power provided by a DC power apparatus, and the charger (22) converts the DC power to charge the battery (30), and the battery (30) provides power required to drive the motor (10) through the inverter (21).

2. The power integration system as claimed in claim 1, wherein the charging unit (22A, 22B, 22C) comprises:
an energy-storing inductor (L₄), coupled to a common-connected node of the shared upper switch (Q₁, Q₃, Qs) and lower switch (Q₂, Q₄, Q₆), and
a sub path (221, 222, 223), coupled to the energy-storing inductor (L₄), and forming an H-bridge arm with the shared upper switch (Q₁, Q₃, Qs) and lower switch (Q₂, Q₄, Q₆); the sub path (221, 222, 223) comprising:
a first switch (Q₇) and a second switch (Q₈),
wherein a first end of the energy-storing inductor (L₄) is coupled to the common-connected node of the shared upper switch (Q₁, Q₃, Qs) and lower switch (Q₂, Q₄, Q₆), and a second end of the energy-storing inductor (L₄) is coupled to a common-connected node of the first switch (Q₇) and the second switch (Q₈),
wherein when a voltage of the battery (30) is greater than a reference voltage value, the charging unit (22A, 22B, 22C) operates in a boost mode to charge the battery (30), and when the voltage of the battery (30) is less than the reference voltage value, the charging unit (22A, 22B, 22C) operates in a buck mode to charge the battery (30).

3. The power integration system as claimed in claim 1, wherein the charging unit (22A, 22B, 22C) comprises:
an energy-storing inductor (L₄), coupled to a common-connected node of the shared upper switch (Q₁, Q₃, Qs) and lower switch (Q₂, Q₄, Q₆), and
a sub path (221, 222, 223), coupled to the energy-storing inductor (L₄), and forming an H-bridge arm with the shared upper switch (Q₁, Q₃, Qs) and lower switch (Q₂, Q₄, Q₆); the sub path (221, 222, 223) comprising:
a first switch (Q₇) and a first diode (D₁),
wherein a first end of the energy-storing inductor (L₄) is coupled to the common-connected node of the shared upper switch (Q₁, Q₃, Qs) and lower switch (Q₂, Q₄, Q₆), and a second end of the energy-storing inductor (L₄) is coupled to a common-connected node of the first switch (Q₇) and the first diode (D₁),
wherein when a voltage of the battery (30) is greater than a reference voltage value, the charging unit (22A, 22B, 22C) operates in a boost mode to charge the battery (30), and when the voltage of the battery (30) is less than the reference voltage value, the charging unit (22A, 22B, 22C) operates in a buck mode to charge the battery (30).

4. The power integration system as claimed in any one of claims 2-3, wherein the battery (30) provides power required by a power-receiving apparatus (50) through the charger (22), or the power-receiving apparatus (50) charges the battery (30) through the charger (22), and according to the power required by the power-receiving apparatus (50), the charging unit (22A, 22B, 22C) makes the battery (30) operate in a boost mode or a buck mode to discharge to the power-receiving apparatus (50).

5. The power integration system as claimed in claim 1, wherein the charging unit (22A, 22B, 22C) comprises:
an energy-storing inductor (L₄), coupled to a common-connected node of the shared upper switch (Q₁, Q₃, Q₅) and lower switch (Q₂, Q₄, Q₆), and
a sub path (221, 222, 223), coupled to the energy-storing inductor (L₄) through the upper switch (Q₁, Q₃, Qs) or the lower switch (Q₂, Q₄, Q₆), and forming a half-bridge arm with the shared upper switch (Q₁, Q₃, Q₅) and lower switch (Q₂, Q₄, Q₆); the sub path (221, 222, 223) comprising:
a first switch (Q₇), coupled to the lower switch (Q₂, Q₄, Q₆), and coupled to the energy-storing inductor (L₄) through the lower switch (Q₂, Q₄, Q₆),
wherein according to a voltage of the battery (30), the charging unit (22A, 22B, 22C) operates in a boost mode or a buck mode to charge the battery (30).

6. The power integration system as claimed in claim 1, wherein the charging unit (22A, 22B, 22C) comprises:
an energy-storing inductor (L₄), coupled to a common-connected node of the shared upper switch (Q₁, Q₃, Qs) and lower switch (Q₂, Q₄, Q₆), and
a sub path (221, 222, 223), coupled to the energy-storing inductor (L₄) through the upper switch (Q₁, Q₃, Q₅) or the lower switch (Q₂, Q₄, Q₆), and forming a half-bridge arm with the shared upper switch (Q₁, Q₃, Qs) and lower switch (Q₂, Q₄, Q₆); the sub path (221, 222, 223) comprising:
a first switch (Q₇), a first end of the first switch (Q₇) coupled to a common-connected node of the upper switch (Q₁, Q₃, Qs) and the lower switch (Q₂, Q₄, Q₆), and a second end of the first switch (Q₇) coupled to the energy-storing inductor (L₄),
wherein according to a voltage of the battery (30), the charging unit (22A, 22B, 22C) operates in a boost mode or a buck mode to charge the battery (30).

7. The power integration system as claimed in claim 1, wherein the charging unit (22A, 22B, 22C) comprises:
an energy-storing inductor (L₄), coupled to a common-connected node of the shared upper switch (Q₁, Q₃, Q₅) and lower switch (Q₂, Q₄, Q₆), and
a sub path (221, 222, 223), coupled to the energy-storing inductor (L₄) through the upper switch (Q₁, Q₃, Q₅) or the lower switch (Q₂, Q₄, Q₆), and forming a half-bridge arm with the shared upper switch (Q₁, Q₃, Qs) and lower switch (Q₂, Q₄, Q₆); the sub path (221, 222, 223) comprising:
a first diode (D₁), coupled to the upper switch (Q₁, Q₃, Q₅), and coupled to the energy-storing inductor (L₄) through the lower switch (Q₂, Q₄, Q₆),
wherein according to a voltage of the battery (30), the charging unit (22A, 22B, 22C) operates in a boost mode or a buck mode to charge the battery (30).

8. The power integration system as claimed in claim 1, wherein the charging unit (22A, 22B, 22C) comprises:
an energy-storing inductor (L₄), coupled to a common-connected node of the shared upper switch (Q₁, Q₃, Qs) and lower switch (Q₂, Q₄, Q₆), and
a sub path (221, 222, 223), coupled to the energy-storing inductor (L₄) through the upper switch (Q₁, Q₃, Q₅) or the lower switch (Q₂, Q₄, Q₆), and forming a half-bridge arm with the shared upper switch (Q₁, Q₃, Qs) and lower switch (Q₂, Q₄, Q₆); the sub path (221, 222, 223) comprising:
a first diode (D₁), a first end of the first diode (Di) coupled to a common-connected node of the upper switch (Q₁, Q₃, Qs) and the lower switch (Q₂, Q₄, Q₆), and a second end of the first diode (Di) coupled to the energy-storing inductor (L₄),
wherein according to a voltage of the battery (30), the charging unit (22A, 22B, 22C) operates in a boost mode or a buck mode to charge the battery (30).

9. The power integration system as claimed in any one of claims 5-8, wherein the battery (30) provides power required by a power-receiving apparatus (50) through the charger (22), or the power-receiving apparatus (50) charges the battery (30) through the charger (22), and according to a voltage of the battery (30), the charging unit (22A, 22B, 22C) makes the battery (30) operate in a boost mode or a buck mode to discharge to the power-receiving apparatus (50).

10. The power integration system as claimed in claim 1, wherein the charging unit (22A, 22B, 22C) comprises:
a plurality of energy-storing inductors (L₄), respectively coupled to common-connected nodes of the shared upper switches (Q₁, Q₃, Qs) and lower switches (Q₂, Q₄, Q₆) of the multi-phase bridge arms, and
a sub path (221, 222, 223), coupled to the plurality of energy-storing inductors (L₄); the sub path (221, 222, 223) comprising:
a first switch (Q₇) and a second switch (Q₈), a common-connected node of the first switch (Q₇) and the second switch (Q₈) coupled to the plurality of energy-storing inductors (L₄), and forming an H-bridge arm with the shared upper switches (Q₁, Q₃, Q₅) and lower switches (Q₂, Q₄, Q₆).

11. The power integration system as claimed in claim 1, wherein the charging unit (22A, 22B, 22C) comprises:
a plurality of energy-storing inductors (L₄), respectively coupled to common-connected nodes of the shared upper switches (Q₁, Q₃, Qs) and lower switches (Q₂, Q₄, Q₆) of the multi-phase bridge arms, and
a sub path (221, 222, 223), coupled to the plurality of energy-storing inductors (L₄); the sub path (221, 222, 223) comprising:
a first switch (Q₇) and a second switch (Q₈), respectively coupled to the upper switches (Q₁, Q₃, Qs) and the lower switches (Q₂, Q₄, Q₆) through the corresponding energy-storing inductors (L₄), and forming a half-bridge arm with the shared upper switches (Q₁, Q₃, Q₅) and lower switches (Q₂, Q₄, Q₆).

12. A power integration system with motor drive and battery charging and discharging function, power integration system the power integration system comprising:
a motor (10),
a power integration circuit (20), comprising:
an inverter (21), comprising multi-phase bridge arms, each bridge arm comprising an upper switch (Q₁, Q₃, Qs) and a lower switch (Q₂, Q₄, Q₆), and each bridge correspondingly coupled to each phase winding of the motor (10), and
a charger (22), comprising a charging unit (22A, 22B, 22C) having at least a switch, an inductor, or a diode, and the upper switch (Q₁, Q₃, Q₅) and the lower switch (Q₂, Q₄, Q₆) of at least one bridge arm of the shared inverter (21), and
a battery (30), coupled to the power integration circuit (20),
wherein the charging unit (22A, 22B, 22C) comprises:
an energy-storing inductor (L₄), coupled to the shared lower switch (Q₂, Q₄, Q₆), and
a sub path (221, 222, 223), coupled to the energy-storing inductor (L₄),
wherein the power integration circuit (20) receives a DC power provided by a DC power apparatus, and the charger (22) converts the DC power to charge the battery (30), and the battery (30) provides power required to drive the motor (10) through the inverter (21).

13. The power integration system as claimed in claim 12, wherein the sub path (221, 222, 223) comprises:
a first switch (Q₇), coupled to the energy-storing inductor (L₄) and the lower switch (Q₂, Q₄, Q₆), and forming a half-bridge arm with the shared upper switch (Q₁, Q₃, Qs) and lower switch (Q₂, Q₄, Q₆),
wherein when a voltage of the battery (30) is greater than a reference voltage value, the charging unit (22A, 22B, 22C) operates in a boost mode to charge the battery (30), and when the voltage of the battery (30) is less than the reference voltage value, the charging unit (22A, 22B, 22C) operates in a buck mode to charge the battery (30).

14. The power integration system as claimed in claim 12, wherein the sub path (221, 222, 223) comprises:
a first switch (Q₇) and a second switch (Q₈), respectively coupled to the energy-storing inductor (L₄) and the corresponding lower switches (Q₂, Q₄, Q₆), and forming a bridge arm circuit with the shared upper switches (Q₁, Q₃, Qs) and lower switches (Q₂, Q₄, Q₆),
wherein when a voltage of the battery (30) is greater than a reference voltage value, the charging unit (22A, 22B, 22C) operates in a boost mode to charge the battery (30), and when the voltage of the battery (30) is less than the reference voltage value, the charging unit (22A, 22B, 22C) operates in a buck mode to charge the battery (30).

15. The power integration system as claimed in any one of claims 13-14, wherein the battery (30) provides power required by a power-receiving apparatus (50) through the charger (22), or the power-receiving apparatus (50) charges the battery (30) through the charger (22), and according to the power required by the power-receiving apparatus (50), the charging unit (22A, 22B, 22C) makes the battery (30) operate in a boost mode or a buck mode to discharge to the power-receiving apparatus (50).
